# EUROPEAN PATENT APPLICATION

(11) **EP 3 153 945 A1**
(43) Date of publication of application: **12.04.2017**
(21) Application number: 15807238.9
(22) Date of filing: 03.06.2015
(51) Int. Cl.: G06F 3/01, G06F 9/44

(54) **METHOD AND DEVICE FOR IMPLEMENTING VIRTUAL BUTTON THROUGH CAMERA, AND COMPUTER-READABLE RECORDING MEDIUM**

(30) Priority: 09.06.2014 KR 20140069284
(71) Applicant: Funmagic, Seoul 135-921 (KR)
(72) Inventor: KIM, Hwajung, Seoul 134-849 (KR)
(74) Representative: Gulde & Partner
(86) International application number: PCT/KR2015/005595
(87) International publication number: WO 2015/190742

(57) **Abstract**

A method and device for implementing a virtual button through a camera according to embodiments of the present invention can provide a user interface for convenient and various environments to a user by including the recognition of touch of a camera lens region as well as a touch screen in an application manipulation interface. In particular, an embodiment of the present invention determines whether a user has recognized a camera button by analyzing only the pixel data of a partial region of pixel data acquired through a camera, and thus the computational load of a CPU can be minimized, with the result that the reaction speed of a manipulation input via the touch screen and the reaction speed of a manipulation input via the camera button can be achieved at almost the same level, thereby improving the convenience of a user interface related to the use of an application.

## Description

### Technical Field

The present invention relates generally to a method, apparatus and computer-readable recording medium for implementing a virtual button through a camera, and more particularly to a method, apparatus and computer-readable recording medium for implementing a virtual button through a camera, which use a camera as a key for manipulating an application.

### Background Art

Generally, the basic elements of touch may be said to be x, y and z. In this case, z is a pressure element that is adapted to press a corresponding location. For example, the basic elements of mice or touch devices may be said to be x and y. Although touch methods may be classified into a single touch method, a multi-touch method, and a finger or object touch method, there is a recent trend toward the development of mobile devices equipped with touch screens capable of multi-touch.

Multi-touch is an interactive technology that enables a computer (or mobile device) user to manipulate a graphic application program or the like by bringing a plurality of fingers into contact with the graphic application program or the like, which is a technology that is very convenient for narrow screens, such as those of smart phones.

Conventional game devices using a smart phone receive user manipulation and provide games based on the above-described touch technology of touch screens. For example, in shooting games such as a First Person Shooter (FPS) game, a user indicates shooting points or manipulates shooting buttons via the touch of a touch screen on a game screen. However, since a user must manipulate shooting points and shooting buttons while touching a game screen with a single finger or two fingers via the game screen, the conventional manipulation method results in considerable inconvenience for the user in terms of manipulation.

That is, although the method of manipulating a game application using a touch screen has been developed, the method has a limitation on the manipulation of various functions by a user due to the limitations of a basic interface.

Although Korean Unexamined Patent Publication No. 10-2014-0035244 discloses a new manipulation method by disclosing a terminal device using user motion based on the distance between a user terminal and a user, this technology has a limitation in the overcoming of the conventional problem because a process using depth information cannot be easily installed on a smart phone and computational load is increased.

Meanwhile, the above-described background art corresponds to technical information that has been possessed by the present inventor in order to devise the present invention or that has been acquired in the process of devising the present invention, and is not necessarily considered to be a well-known technology that had been known to the public before the filing date of the present invention.

### Disclosure

### Technical Problem

An object of an embodiment of the present invention is to use a camera lens as a key for manipulating an application, in addition to a touch screen.

Furthermore, an object of an embodiment of the present invention is to simplify a process of analyzing pixel data acquired through photographing by a camera, thereby reducing the computational load of a CPU and also enabling the touch of a camera lens region to be smoothly applied even to an application requiring immediate responses, such as a game.

Furthermore, an object of an embodiment of the present invention is to perform a test process first in the performance of an operation using a method of temporarily covering a camera lens with a finger of a user, thereby enabling key input to be clearly received.

### Technical Solution

In order to accomplish the above objects, according to a first aspect of the present invention, there is provided a method for implementing a virtual button through a camera, which is performed by a user terminal, the method including: executing an application on the user terminal in response to a user input; performing photographing by a camera of the user terminal; recognizing a change in a pixel value of one region of pixel data acquired through the photographing by the camera; and performing one preset operation of the application in response to the recognition of the change in the pixel value.

Recognizing the change in the pixel value of the region of the pixel data acquired through the photographing by the camera may include, when the change in the pixel value of the region of the pixel data is made to exceed a threshold value by an action of a user covering at least one region of a lens of the camera, recognizing an input adapted to perform the one operation of the application.

Recognizing the change in the pixel value of the region of the pixel data acquired through the photographing by the camera may include: acquiring the pixel data of some pixels that belong to the pixel data of all pixels acquired through the photographing by the camera and that are set as a region of interest; and, when a change in a pixel value of the pixel data of the some pixels exceeds a threshold value, recognizing an input adapted to perform the one operation.

The method may further include, after executing the application on the user terminal, executing a camera test mode, and setting a threshold value adapted to recognize an input adapted to perform the one operation of the application.

Executing the camera test mode and setting the threshold value adapted to recognize the input adapted to perform the one operation of the application may include: performing the photographing by the camera of the user terminal; recognizing the change in the pixel value of the one region of the pixel data acquired through the photographing by the camera in the camera test mode via an action of a user covering at least one region of a lens of the camera; and setting the threshold value by considering the recognized change in the pixel value.

Executing the camera test mode and setting the threshold value adapted to recognize the input adapted to perform the one operation of the application may include: recognizing a change in a pixel value of some pixels that belong to the pixel data of all pixels acquired through the photographing by the camera in the camera test mode and that are set as a region of interest, and setting a threshold value for the region of interest; and recognizing a change in a pixel value of one region of pixel data acquired through the photographing by the camera after the camera test mode may include: recognizing the input adapted to perform the one operation of the application by comparing the change in the pixel value of the region of interest with the set threshold value.

Executing the camera test mode and setting the threshold value adapted to recognize the input adapted to perform the one operation of the application may further include, after recognizing the change in the pixel data acquired via the camera test mode, correcting the locations of the some pixels set as the region of interest.

Recognizing the change in the pixel value of the one region of the pixel data acquired through the photographing by the camera may be recognizing an input adapted to perform the one operation of the application by correcting a threshold value based on a change in the amount of light in an environment around the user terminal and then comparing the change in the pixel value of the one region of the pixel data with the threshold value.

Recognizing the change in the pixel value of the one region of the pixel data acquired through the photographing by the camera may include: acquiring a current pixel value for the acquired pixel data; acquiring an average value of current pixel values from a current time point to a preset previous time point, and setting the average value as the threshold value; and recognizing the input adapted to perform the one operation of the application by recognizing an action of a user covering a lens region of the camera or an action of the user not covering the lens region of the camera through comparison between the current pixel value and the threshold value.

Acquiring the average value of the current pixel values from the current time point to the preset previous time point and setting the average value as the threshold value may include setting 50% or less of the average value as a first threshold value, and setting 200% or more of the average value as a second threshold value.

Recognizing the input related to the one operation of the application by recognizing the action of the user covering the lens region of the camera or the action of the user not covering the lens region of the camera through the comparison between the current pixel value and the threshold value may include: when the current pixel value is smaller than the first threshold value, recognizing that the action of the user covering the lens region of the camera has occurred in a state in which the lens region of the camera was not covered, and thus recognizing an operation input related to covering of the lens region of the camera; and, when the current pixel value is larger than the second threshold value, recognizing that the action of the user not covering the lens region of the camera has occurred in a state in which the lens region of the camera was covered, and thus recognizing an operation input related to not covering of the lens region of the camera.

The method may further include, after executing the application on the user terminal, supplying light to a photographing region of the camera via the light supply unit of the user terminal.

Supplying the light via the light supply unit of the user terminal may be, when the amount of light in an environment around the user terminal is smaller than a preset value, supplying the light.

Recognizing the change in the pixel value of the one region of the pixel data acquired through the photographing by the camera may include: when a brightness value in an environment around the user terminal is smaller than a preset value, recognizing the change in the pixel value based on light and shade of the pixel data; and, when the brightness value in the environment around the user terminal is equal to or larger than the preset value or light is supplied from the light supply unit of the user terminal, recognizing the change in the pixel value based on saturation and color of the pixel data.

When the brightness value in the environment around the user terminal is equal to or larger than the preset value or the light is supplied from the light supply unit of the user terminal, recognizing the change in the pixel value based on the saturation and color of the pixel data may include comparing the change in the pixel value with a saturation threshold value for a red color.

The pixel data may be initial data when the initial data is acquired through the photographing by the camera and photo data that is stored in the user terminal and can be identified by a user is RGB data obtained by converting the initial data.

Meanwhile, according to a second aspect of the present invention, there is provided a computer-readable recording medium having stored therein a program that performs any one of the above-described methods.

Meanwhile, according to a third aspect of the present invention, there is provided a device for implementing a virtual button through a camera, the device including: a pixel data acquisition unit that, after an application has been executed in response to a user input, acquires pixel data by performing photographing by a camera contained in the device; a pixel value change recognition unit that recognizes a change in a pixel value of one region of the pixel data acquired through the photographing by the camera; and an operation performance unit that performs a preset one operation of the application in response to the recognition of the change in the pixel value.

The pixel value change recognition unit may recognize an input adapted to perform the one operation of the application when a change in some pixel values of the pixel data is made to exceed a threshold value by an action of a user covering at least one region of a lens of the camera.

The pixel data acquisition unit may acquire pixel data of some pixels that belong to the pixel data of all pixels acquired through the photographing by the camera and that are set as a region of interest; and the pixel value change recognition unit may recognize an input adapted to perform the one operation when a change in the pixel value of the pixel data of the some pixels exceeds a threshold value.

The device may further include a test mode execution unit that, after the application has been executed on the user terminal, executes a camera test mode, and sets a threshold value adapted to recognize an input adapted to perform the one operation of the application.

The test mode execution unit may perform the photographing by the camera; may recognize the change in the pixel value of the one region of the pixel data acquired through the photographing by the camera in the camera test mode via an action of a user covering at least one region of a lens of the camera; and may set the threshold value by considering the recognized change in the pixel value.

The test mode execution unit may recognize a change in a pixel value of some pixels that belong to the pixel data of all pixels acquired through the photographing by the camera in the camera test mode and that are set as a region of interest, and may set a threshold value for the region of interest; and the pixel value change recognition unit may recognize the input adapted to perform the one operation of the application by comparing the change in the pixel value of the region of interest with the set threshold value.

The test mode execution unit may correct the locations of the some pixels set as the region of interest after recognizing the change in the pixel data acquired via the camera test mode.

The pixel value change recognition unit may recognize an input adapted to perform the one operation of the application by correcting a threshold value based on a change in the amount of light in an environment around the user terminal and then comparing the change in the pixel value of the one region of the pixel data with the threshold value.

The pixel value change recognition unit may acquire a current pixel value for the acquired pixel data, may acquire an average value of current pixel values from a current time point to a preset previous time point and set the average value as the threshold value, and may recognize the input adapted to perform the one operation of the application by recognizing an action of a user covering a lens region of the camera or an action of the user not covering the lens region of the camera through comparison between the current pixel value and the threshold value.

The pixel value change recognition unit may set 50% or less of the average value as a first threshold value, and may set 200% or more of the average value as a second threshold value.

The pixel value change recognition unit, when the current pixel value is smaller than the first threshold value, may recognize that the action of the user covering the lens region of the camera has occurred in a state in which the lens region of the camera was not covered, and thus recognize an operation input related to covering of the lens region of the camera; and, when the current pixel value is larger than the second threshold value, may recognize that the action of the user not covering the lens region of the camera has occurred in a state in which the lens region of the camera was covered, and thus recognize an operation input related to not covering of the lens region of the camera.

The device may further include a light supply unit that supplies light to a photographing region of the camera after the application has been executed on the user terminal.

The light supply unit may supply the light when the amount of light in an environment around the user terminal is smaller than a preset value; and may stop the light supply operation when pixel data acquired while the light supply operation is stopped for a preset time at each predetermined period after starting of the light supply operation is higher than the preset value.

The pixel value change recognition unit may recognize the change in the pixel value based on the light and shade of the pixel data when a brightness value in an environment around the user terminal is smaller than a preset value, and may recognize the change in the pixel value based on the saturation and color of the pixel data when the brightness value in the environment around the user terminal is equal to or larger than the preset value or light is supplied from the light supply unit of the user terminal.

The pixel value change recognition unit may recognize the change in the pixel value by comparing the change in the pixel value with a saturation threshold value for a red color when the brightness value in the environment around the user terminal is equal to or larger than the preset value or the light is supplied from the light supply unit of the user terminal.

The pixel data may be initial data when the initial data is acquired through the photographing by the camera and photo data that is stored in the user terminal and can be identified by a user is RGB data obtained by converting the initial data.

### Advantageous Effects

According to any one of the above-described technical solutions of the present invention, an embodiment of the present invention enables an input adapted to temporarily cover the camera lens with a finger of a user to be set for an operation of an application in advance, and thus the number of keys which can be used is increased, thereby increasing the convenience of use of an application during the use of the application.

In particular, when the camera is disposed on a rear side, the touch screen can be manipulated with the thumb and the camera lens can be manipulated with another finger, such as the index or middle finger, thereby extending an application manipulation interface.

Furthermore, to analyze the input of a user regarding the camera lens, a process of analyzing pixel data acquired through photographing by the camera needs to be performed. In this case, an embodiment of the present invention is configured to extract only the data of a preset partial region from the acquired pixel data and identify the action of the user pressing the camera lens region, thereby minimizing CPU computational load regarding the process of analyzing acquired pixel data. For example, although 25344 pixels need to be analyzed in order to analyze an image having a size of 176 × 144, an embodiment of the present invention enables an action of a user to be identified only by inspecting four to five pixels, thereby minimizing CPU computational load. Generally, a process of analyzing pixel data through photographing by a camera may become one of the causes of a reduction in reaction speed when being added to an application for which the reaction speed of a manipulation key is an important factor, such as a game. However, an embodiment of the present invention is configured to simplify a process of analyzing pixel data, and thus a reduction in reaction speed is minimized even when the process is added to an application, such as a game. Accordingly, reaction speed to a manipulation key for the camera lens can be provided at the same level as reaction speed to another manipulation key (a manipulation key that is input via a touch screen) is provided.

Furthermore, according to an embodiment of the present invention, an input regarding the camera lens can be recognized even in a dark situation using the light supply function of the user terminal, thereby enabling the user interface using the camera lens to be used anytime.

Furthermore, according to an embodiment of the present invention, the threshold values of input for the camera lens are set in advance by executing the test mode, and thus the recognition of the camera lens input suitable for each user can be implemented, thereby enabling an application manipulation interface optimized for a user to be provided.

The effects that can be achieved in the present invention are not limited to the above-described effects, and other effects that have not been described will be clearly understood by those having ordinary knowledge in the art to which the present invention pertains from the following description.

### Description of Drawings

FIG. 1 is a block diagram of a device for implementing a virtual button through a camera according to an embodiment of the present invention;
FIGS. 2 and 4 are diagrams illustrating an example in which a user does not cover a camera lens region and an example in which a user covers a camera lens region, respectively;
FIGS. 3 and 5 are diagrams illustrating an example of the operation screen of an application that appears in the case of FIG. 2 and an example of the operation screen of an application that appears in the case of FIG. 4, respectively;
FIGS. 6 and 7 are diagrams illustrating examples of covering a camera lens region according to embodiments of the present invention;
FIG. 8 is a flowchart of a method for implementing a virtual button through a camera according to an embodiment of the present invention; and
FIG. 9 is a flowchart of a method for implementing a virtual button through a camera according to an additional embodiment of the present invention.

### Mode for Invention

Embodiments of the present invention will be described in detail below with reference to the accompanying drawings in order to enable those having ordinary knowledge in the art to which the present invention pertains to easily practice the present invention. However, the present invention may be implemented in different forms, and is not limited to embodiments described herein. Furthermore, in order to clearly illustrate the present invention in the drawings, portions unrelated to the following description will be omitted. Throughout the specification, similar reference symbols will be assigned to similar portions.

Throughout the specification, when any portion is described as being "connected" to another portion, this includes both the case where the any portion is "directly connected" to the other portion and the case where the any portion is "electrically connected" to the other portion through a third portion. Furthermore, when any portion is described as including any component, this does not mean that another component is excluded but means that the any portion may include another component unless otherwise specified.

The present invention will be described in detail below with reference to the accompanying diagrams.

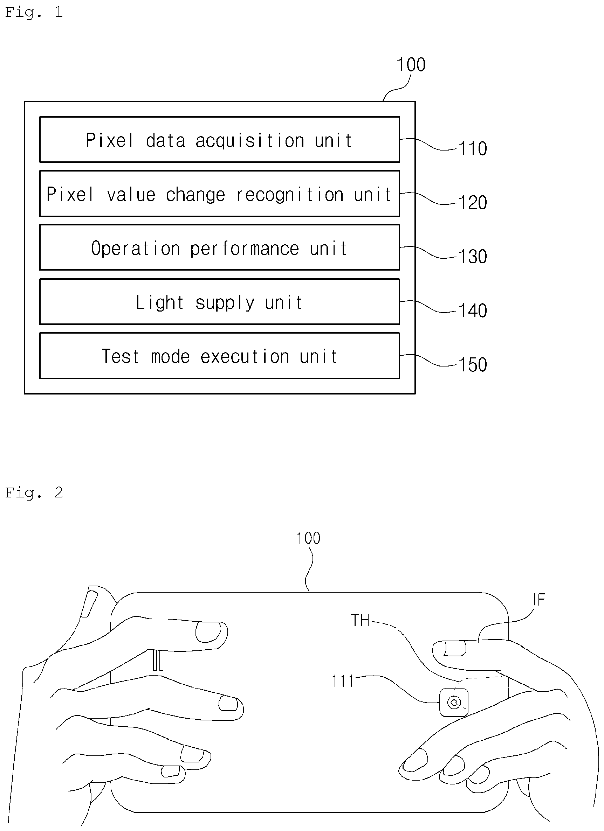

FIG. 1 is a diagram illustrating the configuration of a device 100 for implementing a virtual button through a camera according to an embodiment of the present invention. The device 100 may connect to a server at a remote location over a network, or may be implemented as a computer, a portable terminal, or a television that is connectable to another terminal and a server. In this case, the computer includes, for example, a notebook, a desktop, or a laptop on which a web browser has been installed. The portable terminal is, for example, a wireless communication device capable of guaranteeing portability and mobility, and may include all types of handheld wireless communication devices, such as a Personal Communication System (PCS) terminal, a Personal Digital Cellular (PDC) terminal, a Personal Handyphone System (PHS) terminal, a Personal Digital Assistant (PDA), a Global System for Mobile communications (GSM) terminal, an International Mobile Telecommunication (IMT)-2000 terminal, a Code Division Multiple Access (CDMA)-2000 terminal, a W-Code Division Multiple Access (W-CDMA) terminal, a Wireless Broadband (Wibro) Internet terminal, a smartphone, and a Mobile Worldwide Interoperability for Microwave Access (mobile WiMAX) terminal. Furthermore, the television may include an Internet Protocol Television (IPTV), an Internet Television (Internet TV), a terrestrial TV, a cable TV, etc. Furthermore, the device 100 may be an application program module that is installed on the above-described terminal and that executes an application.

After executing an application in response to an input of a user, the device 100 executes a camera setting mode, and sets a camera as an application manipulation key in response to a selection of the user, thereby implementing the camera as a virtual button. In this case, the camera may be a front camera or a rear camera.

The device 100 includes a pixel data acquisition unit 110, a pixel value change recognition unit 120, an operation performance unit 130, a light supply unit 140, and a test mode execution unit 150.

After the application has been executed, the pixel data acquisition unit 110 operates the camera, and acquires pixel data through photographing by the camera. In this case, the photographing by the camera is performed for the purpose of acquiring pixel data, not for the purpose of storing a photo or an image file. The pixel data is the data of an image entering only into a camera lens, and refers to array data obtained by collecting all the information of pixels. When the camera is operated, the user may feel that pixel data is acquired among images in front of the camera on the screen of the device 100 only when a photo photographing button is pressed. In practice, a massive amount of preview pixel data is acquired, and is continuously updated. Of these data, only preview pixel data when a photo photographing button is pressed is stored in the form of an image or photo file.

The pixel data acquisition unit 110 may acquire pixel data at predetermined periods. For example, the pixel data acquisition unit 110 may acquire pixel data at periods of 1 msec. Furthermore, the pixel data acquired at the predetermined periods are accumulated over time. The pixel data is not additionally generated, but is continuously updated.

In this case, the pixel data acquired by the pixel data acquisition unit 110 may be YUV format-based data. YUV is a color model in which a brightness value and a color difference signal are separated from color pixel data and the color pixel data is represented by the brightness value and the color difference signal. Generally, when a photo is photographed using a camera, an image viewed by a user is provided by acquiring YUV pixel data and converting the YUV pixel data into RGB format. However, an embodiment of the present invention is configured to acquire initial pixel data (pixel data in YUV format) before conversion into RGB format and use the initial pixel data. YUV format is advantageous in that the YUV format has desirable compatibility because the YUV format is supported by most devices and in that it is not necessary to undergo a separate process of interpreting a brightness value from pixel data because the YUV format itself does not include a brightness value (the Y value of YUV values). Meanwhile, the pixel data acquisition unit 110 may acquire pixel data in various formats, such as JPEG and PNG formats, as well as YUV format.

Furthermore, the pixel data acquisition unit 110 may acquire only the pixel data of a partial region (i.e., at least one region of interest) of an overall area. The pixel data of the region of interest may be the pixel data of a dense partial region in an overall area, or may be the pixel data of regions that are disposed to be spaced apart from each other. Furthermore, the location and range of the region of interest may be previously designated. Preferably, the pixel data acquisition unit 110 may designate previously designated five pixels at a center and edges as the region of interest, and may acquire the pixel data of the region of interest. When an attempt is made to determine a user's action of covering a camera lens region by analyzing an overall pixel data acquired through photographing by the camera, a massive amount of CPU computational load is generated. However, when only the pixel data of the region of interest is used, such computational load can be minimized, and thus camera button recognition speed can be improved when the recognition of a camera button is incorporated into the manipulation of a game. For example, although 25344 pixels need to be analyzed in order to analyze an image having a size of 176 × 144, an embodiment of the present invention can determine an action of the user only by analyzing four to five pixels, and thus CPU computational load can be minimized.

The pixel value change recognition unit 120 recognizes whether an operation of an application has occurred based on a change in the pixel value of the acquired pixel data. The pixel value refers to at least one value of the brightness, saturation and hue values of a pixel in pixel data. The change in the pixel value may be generated by the user's action of temporarily covering the camera lens region with his or her finger.

More specifically, the pixel value change recognition unit 120 calculates a current pixel value from the acquired pixel data. The pixel value change recognition unit 120 calculates the average brightness value of the remaining three brightness values obtained by excluding the highest brightness value and the lowest brightness value from the acquired five pixel values, and designates the calculated average brightness value as a current pixel value. Thereafter, the pixel value change recognition unit 120 determines whether the action of covering the camera lens region (i.e., the action of pressing a camera button) has occurred through the comparison between the current pixel value and a threshold value. This will be described in greater detail below:

### - State in which the camera button has not been pressed (a button up state)

The following description will be given on the assumption that a camera lens region is a camera button. The state in which the camera button has not been pressed is the state in which a camera lens region 111 is not covered. Referring to FIG. 2, the user supports a device 100 with both hands, and the index finger IF of the left hand is disposed away from the camera lens region 111. In this case, an image that is input to a camera lens is an image of an object that is present in front of the device 100. During the daytime, the acquired pixel data may be an image in which an object is recognizable.

### - State in which the camera button has not been pressed (a button down state)

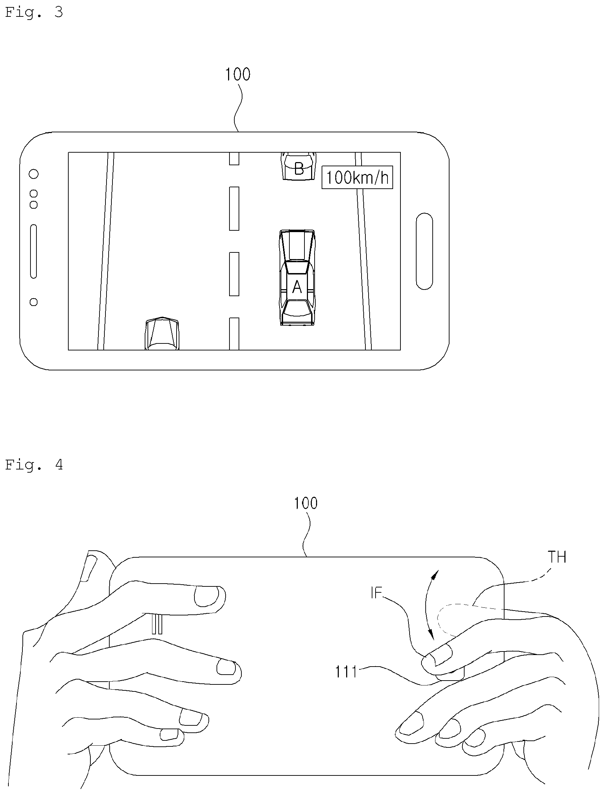

The state in which the camera button has been pressed is the state in which the camera lens region 111 is covered. When the index finger IF of the left hand comes into contact with the camera lens region 111, as shown in FIG. 4, the pixel value of the acquired pixel data changes rapidly. For example, light does not enter into the camera lens region 111 covered with a finger, and the pixel value of the acquired pixel data may appear as having dark brightness. Alternatively, when a surrounding environment is excessively bright, light may leak into the camera lens region 111 through a gap that is not covered or light may enter into the camera lens region 111 through the finger even when the camera lens region 111 is covered with the finger, and thus the pixel value of the acquired pixel data may appear as having an apricot color or a red color.

In this case, whether an operation of an application has occurred is determined based on a change in the pixel value between the state in which the camera button is pressed and the state in which the camera button is not pressed. The change in the pixel value may be determined through the comparison between a current pixel value and a threshold value. The threshold value is a threshold value regarding the amount of change in the pixel value. The threshold value may be determined in advance, or may be determined based on a test mode, which will be described later. The process of recognizing the state of the camera button through the comparison between the change in the pixel value and the threshold value will be described in greater detail below:

### - Switching from the button up state to the button down state

The current pixel value of the button down state (i.e., the state in which the camera lens region is covered) may be lower than that of the button up state in terms of brightness. Accordingly, at the moment that the brightness value of the current pixel value becomes lower than a first threshold value (a brightness value) after the state has remained in the button up state, the pixel value change recognition unit 120 may recognized this as a button down command. The first threshold value is a value corresponding to 50% or lower of the average pixel value, and the average pixel value refers to an average value of pixel values collected during a time range from a current time point to a preset previous time point (for example, a time range from a current time point to a time point a few seconds before the current time point). That is, when the current brightness value of pixels becomes considerably lower than the average brightness value, this may be recognized as a button down command.

### - Switching from the button down state to the button up state

The current pixel value of the button up state (i.e., the state in which the camera lens region is not covered) may be higher than that of the button down state in terms of brightness. Accordingly, at the moment that a brightness value becomes the second threshold value (a brightness value) of the current pixel value after the state has remained in the button down state, the pixel value change recognition unit 120 may recognize this as a button up command. The second threshold value is a value corresponding to 200% or higher of an average pixel value. That is, when the current brightness value of a pixel becomes considerably higher than the average brightness value, this may be recognized as a button up command.

Meanwhile, in the above example, the first and second threshold values may be set to the same value. Furthermore, the percentages of 50% and 200% set in connection with the first and second threshold values are merely examples, and different percentages may be set.

Furthermore, the first and second threshold values may be set to fixed values in advance. However, when the first and second threshold values are set to include the average pixel value, as described in the above example, an advantage arises in that the button up and down states can be recognized by correcting the threshold values based on the amount of light around the device 100. That is, when the first and second threshold values are fixed values, the level of recognition of button input in a slightly dark place and the level of recognition of button input in a slightly bright place may vary. In an example such as the above example, this problem may be eliminated because the first and second threshold values gradually decrease as movement is performed from a bright place to a dark place.

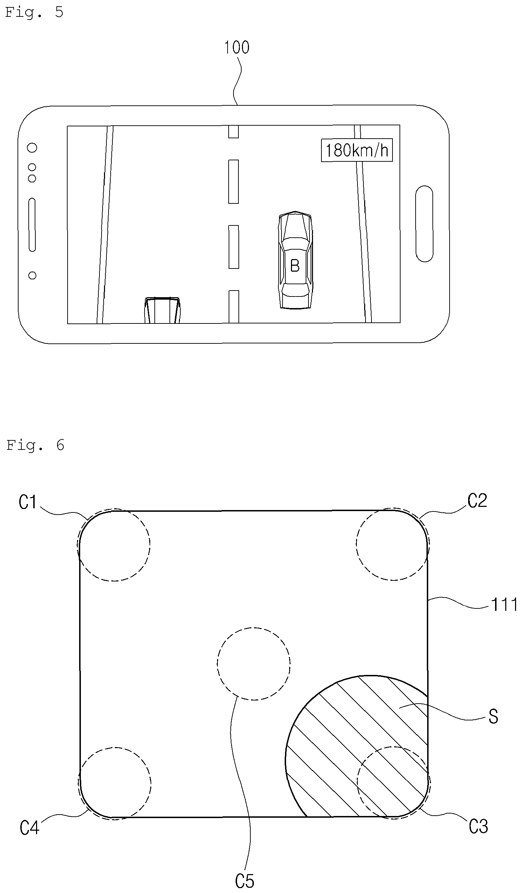

The operation performance unit 130 receives a specific operation command from the pixel value change recognition unit 120, and performs a preset operation of the application. For example, assumed is a case where the application is a car racing game application and an input adapted to cover the camera lens region (i.e., the button down state) is designated as an input adapted to step on an accelerator in the game. In this case, in the state in which the camera lens region is not covered (i.e., the button up state), as shown in FIG. 2, any change does not appear during general driving, such as that shown in FIG. 3. In contrast, when the user performs the action of covering the camera lens region with the index finger IF of the left hand (i.e., the button down state), as shown in FIG. 4, an input related to the accelerator is applied to the car of the user in the game, as shown in FIG. 5, and thus the speed of the car may be accelerated in the game.

Most conventional car racing applications are implemented such that a direction is controlled by tilting the device 100 of a user. In this case, the user must support his or her own device 100 with his or her both hands, as shown in FIG. 2, the fingers that can apply input to a touch screen include only the thumb of the right hand and the thumb TH of the left hand. In this case, when the thumb of the right hand and the thumb TH of the left hand need to be assigned to a gear shift and the control of a brake operation key, a finger required to control an operation key for an accelerator 100 lacks.

In contrast, according to an embodiment of the present invention, by setting a rear camera as the operation key for an accelerator, an additional operation key may be assigned in the operation of the game application, and the additional operation key may be disposed at a more convenient location, thereby providing more convenience to the manipulation of the game by the user.

It will be apparent that this embodiment of the present invention may be designated as a user interface for various game applications, including a shooting game as well as the car racing game. For example, in conventional shooting games, a shooting direction control button and a shooting command button are implemented via the touch screen of a device. For example, play is performed using a method of controlling a shooting direction with the thumbs of both hands and pressing a shooting command button with the thumb of any one hand or another finger. However, in this case, the control of the shooting direction and the shooting command are input on the same plane, and thus the inconvenience of manipulation is great. However, according to this embodiment of the present invention, a shooting command is enabled to be input on a plane different from a plane on which a shooting direction is controlled, and thus the convenience of user manipulation can be improved. Furthermore, this embodiment of the present invention may be designated as a user interface for various applications other than a game application.

The light supply unit 140 (a so-called "flash") turns on a light when the amount of light around the device 100 is small, thereby enabling a change in the pixel value to be recognized from the pixel data acquired via the camera. For example, when the user executes an application and uses a camera mode in the middle of the night, the pixel values of pixel data acquired in the state in which the user does not press the camera button exhibit dark values in a uniform manner. Accordingly, a change in the pixel value between a button down state and a button up state scarcely appears, and thus an input relates to the camera button cannot be recognized.

Accordingly, in order to prevent this problem, the light supply unit 140 is disposed in the same plane as the camera and supplies light, and thus a change in pixel value between a button down state and a button up state is made distinctive, thereby enabling the pixel value change recognition unit 120 to recognize a state in which the camera button is pressed.

The light supply unit 140 may be manually operated by the user. However, when the average brightness value is equal to or lower than a preset brightness value, the light supply unit 140 may operate to automatically emit light. Although the average brightness value may be measured separately, the above-described first and second threshold values may be used. Meanwhile, since the amount of light to be supplied is large and the light supply unit 140 is generally disposed adjacent to the camera lens region, light leaks into a camera lens through a small gap between the camera lens and a finger or light enters into the camera lens through the finger even when the camera lens is covered with the finger in the state in which the light is supplied. Accordingly, the pixel value of pixel data acquired through photographing by the camera has the color of a finger (i.e., an apricot color) or the color of blood (i.e., a red color) other than a dark color. Accordingly, in this case, it is preferred that a criterion by which the pixel value change recognition unit 120 determines a change in pixel value is designated as saturation and color.

Meanwhile, once the light supply unit 140 has been automatically operated, the operation of the light supply unit 140 needs to be automatically stopped in an appropriate situation. That is, when the operation of the light supply unit 140 is not required any longer because the user executed an application in a dark place and has moved to a bright place, the device 100 may automatically stop the operation of the light supply unit 140. More specifically, the light supply unit 140 may be powered off for a short period of time (for example, 0.1 seconds), which cannot be recognized by the user, at predetermined periods (for example, every 30 seconds). The pixel data acquisition unit 110 acquires pixel data for this short period of time. A case where the brightness value of pixel data acquired in the above case is still lower than a preset brightness value corresponds to a case where the user is still using an application in a dark environment, and thus the light supply unit 140 may continuously operate. In contrast, a case where the brightness value of pixel data acquired in the above case is higher than the preset brightness value corresponds to a case where the user has moved to a bright environment, and thus the operation of the light supply unit 140 may stop.

Meanwhile, generally, in the state in which a surrounding environment has an appropriate amount of light, an input related to the camera button can be recognized using only a change in the light and shade of the pixel data. However, in a case where a surrounding environment is excessively bright or the light supply unit 140 supplies light, brightness values cannot be accurately determined from pixel data acquired in the button down state, in which case it is preferable to determine the button up/down state via saturation and color.

More specifically, when the average brightness value exceeds the preset brightness value or the light supply unit 140 operates, the pixel value change recognition unit 120 may operate to recognize the button up/down state by considering saturation and color. In this case, in the button down state, light passes through the finger or leaks through a gap between the finger and the camera lens, and thus the pixel data has a red pixel value. Accordingly, the pixel value change recognition unit 120 may recognize the button down state based on a saturation value for a red color.

Although the first and second threshold values are brightness values in the above-described example, a third threshold value that can be compared with a saturation value may be designated in the present additional example, and the button up and down states may be determined through the comparison between the acquired pixel data and the third threshold value. For example, the button down state may be recognized when the saturation value of the acquired pixel data is higher than the third threshold value, and the button up state may be recognized when the saturation value of the pixel data is lower than the third threshold value.

In contrast, when the average brightness value does not exceed a preset brightness value, operation is performed, as described above.

Meanwhile, although the pixel value change recognition unit 120 may separately measure the average brightness value, the first and second threshold values include the average brightness value according to the above-described example, and thus at least one of the first and second threshold values may be used as the average brightness value.

The test mode execution unit 150 is a component that may be selectively included in the device 100 according to an embodiment of the present invention, and executes a camera test mode in order to set the threshold values. The camera test mode may be executed anytime, for example, at the initial stage of the execution of an application or in the middle of execution of the application. Furthermore, when the camera test mode is not executed, the threshold values are set to initial set values. The camera test mode requests a user to perform the action of covering the camera lens with a finger and taking the finger off the camera lens. After the user has performed the action, threshold values adapted to recognize a user's action as an input adapted to operate an application may be set by analyzing changes in the pixel value of pixel data.

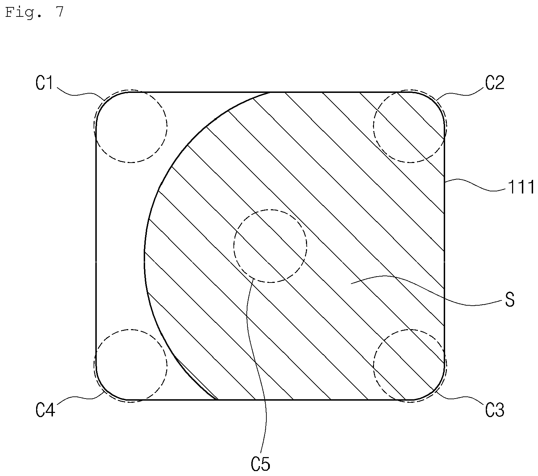

More specifically, the test mode execution unit 150 operates the camera via the pixel data acquisition unit 110. Thereafter, the user is requested to temporarily cover the camera lens region and take a finger off via the screen of the device 100. When the user covers the camera lens region, the shapes of the covered region may be various. For example, a part of the edges of the camera lens region 111 may be covered, as shown in FIG. 6, and the most part of the camera lens region 111 may be covered, as shown in FIG. 7. The test mode execution unit 150 recognizes a change in the pixel value of the covered region from acquired pixel data. In particular, the test mode execution unit 150 may recognize only a change in the pixel value of one or more regions of interest in an overall area. For example, when the regions of interest are set to the four edge regions and center region of the camera lens region 111, as shown in FIGS. 6 and 7, only a change in the pixel value at C3 can be recognized in FIG. 6, and only a change in the pixel value at C2, C3 and C5 can be recognized in FIG. 7.

Meanwhile, in additional embodiment, when a preset region of interest is present, a user input is received via the camera test mode, and then the location or range of the preset region of interest may be corrected. Alternatively, as an option, a case where a finger of a user is thick or a case where the finger of the user is thin may be selected, and then the location or range of the preset region of interest may be corrected for each case.

In the provision of a game application service, game execution speed may act as an important factor that determines the success of the service. The reason for this is that a dynamic and speedy service can be provided to a user only when game execution speed is high, thereby preventing dull and inconvenient sentiments from being provided to a user. Furthermore, generally, an input means (that is, a camera) other than the touch screen is added in the manipulation of a game, and thus the computational load of the device 100 is rapidly increased. In contrast, significance lies in that an embodiment of the present invention uses simple computational processes, such as "① the determination of a change in the pixel data of a region of interest and ② recognition as an operation of an application" and thus a reduction in the speed of the operation of an application caused by the addition of a camera can be minimized.

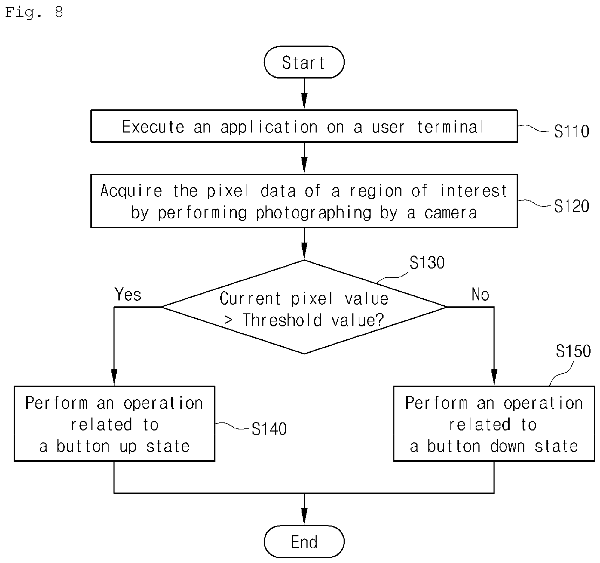

A method for implementing a virtual button through a camera according to an embodiment of the present invention will be described below in greater detail in conjunction with FIG. 8.

First, a user executes a specific application on his or her user terminal (that is, the device 100) at step S110. After the application has been executed, a camera setting mode may be provided, and a mode in which a camera may be used as a manipulation key according to the selection of the user may be selected.

Thereafter, the user terminal 100 performs photographing by the camera at step S120. By performing the photographing by the camera, the user terminal 100 may acquire the pixel data of an object disposed in front of the camera at step S120. In this case, the acquired pixel data is data in YUV format. Generally, when a photo photographed by a camera is stored, pixel data in YUV format is acquired, and then converted into RGB format. In contrast, an embodiment of the present invention can immediately use data in YUV format, which has not been converted into RGB format. However, this corresponds merely to an embodiment, formats other than YUV format may be applied. Furthermore, the acquired pixel data may be the pixel data of one or more regions of interest, i.e., part of an overall area. For example, 25344 pixels need to be analyzed in order to analyze an image having a size of 176 x 144. In contrast, an embodiment of the present invention is configured to acquire only the pixel data of four to five pixels, thereby minimizing CPU computational load.

The user terminal 100 calculates a current pixel value from the acquired pixel data and compares the current pixel value with a threshold value at step S130. The user terminal 100 calculates the average brightness value of remaining three pixel values obtained by excluding the highest brightness value and the lowest pixel value from the acquired pixel values of the plurality of pixels, and designates the average value as the current pixel value. In this case, a threshold value may be a brightness value.

Thereafter, when the current pixel value is higher than the threshold value, it is determined that the user does not cover a camera lens (a button up state) and an operation related to the button up state is performed at step S140. In contrast, when the current pixel value is equal to or lower than the threshold value, it is determined that the user covers the camera lens (a button down state) and an operation related to the button down state is performed at step S150.

More specifically, when the current pixel value is lower than a first threshold value, the user terminal 100 may recognize an input as an input related to the button up state. Furthermore, when the current pixel value is higher than a second threshold value, the user terminal 100 may recognize an input as an input related to the button down state. In this case, the first threshold value and the second threshold value are related to brightness values, and may be set to different values or the same value. Meanwhile, when the first and second threshold values are set to values into which the brightness value of a surrounding environment has been incorporated in real time, the first and second threshold values may be corrected based on a change in the amount of light around the user terminal 100 in real time. For example, the first threshold value adapted to determine the button down state may be 50% of a brightness value collected from a current time point to a preset previous time point. Furthermore, the second threshold value adapted to determine the button up state may be 200% of a brightness value collected from a current time point to a preset previous time point.

Additionally, an embodiment of the present invention may perform a camera test mode at a step between steps S110 and S120. The camera test mode is a mode in which a threshold value adapted to recognize the action of covering the camera lens in the future is set by requesting the user to perform the operation of temporarily covering the camera lens region in advance.

Furthermore, in an embodiment of the present invention, when step S120 is performed and an environment around the user terminal 100 is dark, photographing may be performed while light is being radiated using the light supply unit 140. Accordingly, even in an environment in which it is difficult to observe a change in pixel data, the change in pixel data may be made to be recognized, and an operation of the user related to a camera button input may be identified.

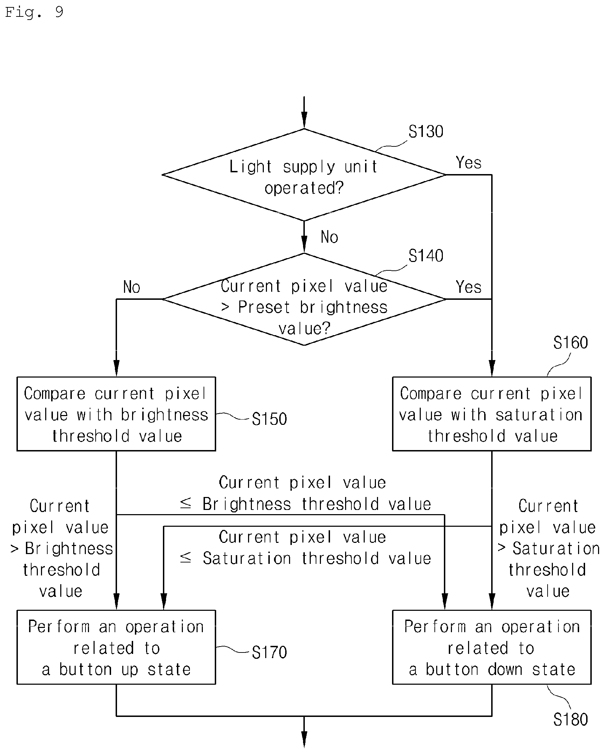

Furthermore, according to an additional embodiment of the present invention, steps S130 to S150 of FIG. 8 may be replaced with steps S130 to S180 of FIG. 9. At steps S130 to S180 of FIG. 9, a brightness threshold value and a saturation threshold value that vary depending on the amount of light around the user terminal 100, the button up and down states may be recognized.

First, the user terminal 100 determines whether the light supply unit has operated at step S130. The light supply unit may operate when it is difficult to identify an object from the pixel data because a surrounding environment is dark. Although the light supply unit may be manually operated by the manipulation of the user, the light supply unit may be automatically operated when the amount of ambient light is smaller than a preset reference.

When the light supply unit is not operated, the current pixel value is compared with the preset brightness value at step S140.

When the current pixel value is higher than the preset brightness value, the surrounding environment of the user terminal 100 is excessively bright, and thus the user's action of covering the camera lens cannot be identified only through the analysis of a brightness value. Accordingly, in this case, a setting is made such that the current pixel value is compared with a saturation threshold value at step S160. When the amount of ambient light is massive, light enters into the camera lens region through the finger even when the user covers the camera lens with the finger, in which case the acquire pixel data has a red color. Accordingly, the saturation threshold value may be set to a saturation threshold value for the red color.

When the current pixel value is higher than the saturation threshold value, a case in question may be determined to be a case of covering the camera lens with the finger, and thus the user terminal 100 performs an operation related to the button down state at step S180. In contrast, when the current pixel value is equal to or lower than the saturation threshold value, it is difficult to determine that the user's action of covering the camera lens has been normally performed, and thus an operation related to the button up state is performed at step S170.

Meanwhile, since the operations of steps S150 to S180 are the same as the operations of the steps S130 to 150 of FIG. 8, descriptions of the former operations are replaced with the above corresponding descriptions.

The methods for implementing a virtual button through a camera according to the embodiments described in conjunction with FIGS. 8 and 9 may be implemented in the form of a storage medium including computer-executable instructions, such as a computer-executable program module. The computer-readable medium may be an arbitrary computer-accessible available medium, and includes all volatile and nonvolatile media and separable and non-separable media. Furthermore, the computer-readable medium may include all computer storage media and communication media. The computer storage medium includes volatile, nonvolatile, separable and non-separable media that are intended to store information, such as computer-readable instructions, a data structure, a program module or another type of data, and that is implemented using an arbitrary method or technology. The communication medium typically includes computer-readable instructions, a data structure, a program module, or the data of a modulated data signal such as a carrier, or another type of transmission mechanism, and includes an arbitrary information transfer medium.

The above description of the present invention is intended for the purpose of illustration. It will be apparent to those having ordinary knowledge in the art to which the present invention pertains that the present invention can be easily modified in other specific forms without changing the technical spirit and essential features of the present invention. Accordingly, the above-described embodiments are should be understood as being illustrative and not limitative in every aspect. For example, each component described as being in a single form may be practiced in a distributed form and, in the same manner, components described as being in a distributed form may be practiced in an integrated form.

The range of the present invention is defined by the following claims, rather than the detailed description. All variations and modifications derived from the meaning and scope of the claims and concepts equivalent thereto should be construed as being included in the range of the present invention.

## Claims

1. A method for implementing a virtual button through a camera, which is performed by a user terminal, the method comprising:
executing an application on the user terminal in response to a user input;
performing photographing by a camera of the user terminal;
recognizing a change in a pixel value of one region of pixel data acquired through the photographing by the camera; and
performing one preset operation of the application in response to recognition of the change in the pixel value.

2. The method of claim 1, wherein recognizing the change in the pixel value of the region of the pixel data acquired through the photographing by the camera comprises:
when the change in the pixel value of the region of the pixel data is made to exceed a threshold value by an action of a user covering at least one region of a lens of the camera, recognizing an input adapted to perform the one operation of the application.

3. The method of claim 1, wherein recognizing the change in the pixel value of the region of the pixel data acquired through the photographing by the camera comprises:
acquiring pixel data of some pixels that belong to the pixel data of all pixels acquired through the photographing by the camera and that are set as a region of interest; and
when a change in a pixel value of the pixel data of the some pixels exceeds a threshold value, recognizing an input adapted to perform the one operation.

4. The method of claim 1, further comprising:
after executing the application on the user terminal, executing a camera test mode, and setting a threshold value adapted to recognize an input adapted to perform the one operation of the application.

5. The method of claim 4, wherein executing the camera test mode and setting the threshold value adapted to recognize the input adapted to perform the one operation of the application comprises:
performing the photographing by the camera of the user terminal;
recognizing the change in the pixel value of the one region of the pixel data acquired through the photographing by the camera in the camera test mode via an action of a user covering at least one region of a lens of the camera; and
setting the threshold value by considering the recognized change in the pixel value.

6. The method of claim 4, wherein:
executing the camera test mode and setting the threshold value adapted to recognize the input adapted to perform the one operation of the application comprises:
recognizing a change in a pixel value of some pixels that belong to the pixel data of all pixels acquired through the photographing by the camera in the camera test mode and that are set as a region of interest, and setting a threshold value for the region of interest; and
recognizing a change in a pixel value of one region of pixel data acquired through the photographing by the camera after the camera test mode comprises:
recognizing the input adapted to perform the one operation of the application by comparing the change in the pixel value of the region of interest with the set threshold value.

7. The method of claim 6, wherein executing the camera test mode and setting the threshold value adapted to recognize the input adapted to perform the one operation of the application further comprises:
after recognizing the change in the pixel data acquired via the camera test mode, correcting locations of the some pixels set as the region of interest.

8. The method of claim 1, wherein recognizing the change in the pixel value of the one region of the pixel data acquired through the photographing by the camera is:
recognizing an input adapted to perform the one operation of the application by correcting a threshold value based on a change in the amount of light in an environment around the user terminal and then comparing the change in the pixel value of the one region of the pixel data with the threshold value.

9. The method of claim 8, wherein recognizing the change in the pixel value of the one region of the pixel data acquired through the photographing by the camera comprises:
acquiring a current pixel value for the acquired pixel data;
acquiring an average value of current pixel values from a current time point to a preset previous time point, and setting the average value as the threshold value; and
recognizing the input adapted to perform the one operation of the application by recognizing an action of a user covering a lens region of the camera or an action of the user not covering the lens region of the camera through comparison between the current pixel value and the threshold value.

10. The method of claim 9, wherein acquiring the average value of the current pixel values from the current time point to the preset previous time point and setting the average value as the threshold value comprises:
setting 50% or less of the average value as a first threshold value, and setting 200% or more of the average value as a second threshold value.

11. The method of claim 10, wherein recognizing the input related to the one operation of the application by recognizing the action of the user covering the lens region of the camera or the action of the user not covering the lens region of the camera through the comparison between the current pixel value and the threshold value comprises:
when the current pixel value is smaller than the first threshold value, recognizing that the action of the user covering the lens region of the camera has occurred in a state in which the lens region of the camera was not covered, and thus recognizing an operation input related to covering of the lens region of the camera; and
when the current pixel value is larger than the second threshold value, recognizing that the action of the user not covering the lens region of the camera has occurred in a state in which the lens region of the camera was covered, and thus recognizing an operation input related to not covering of the lens region of the camera.

12. The method of claim 1, further comprising:
after executing the application on the user terminal, supplying light to a photographing region of the camera via a light supply unit of the user terminal.

13. The method of claim 12, wherein supplying the light via the light supply unit of the user terminal is:
when the amount of light in an environment around the user terminal is smaller than a preset value, supplying the light.

14. The method of claim 12, wherein recognizing the change in the pixel value of the one region of the pixel data acquired through the photographing by the camera comprises:
when a brightness value in an environment around the user terminal is smaller than a preset value, recognizing the change in the pixel value based on light and shade of the pixel data; and
when the brightness value in the environment around the user terminal is equal to or larger than the preset value or light is supplied from the light supply unit of the user terminal, recognizing the change in the pixel value based on saturation and color of the pixel data.

15. The method of claim 14, wherein when the brightness value in the environment around the user terminal is equal to or larger than the preset value or the light is supplied from the light supply unit of the user terminal, recognizing the change in the pixel value based on the saturation and color of the pixel data comprises:
comparing the change in the pixel value with a saturation threshold value for a red color.

16. The method of claim 1, wherein the pixel data is initial data when the initial data is acquired through the photographing by the camera and photo data that is stored in the user terminal and can be identified by a user is RGB data obtained by converting the initial data.

17. A computer-readable recording medium having stored therein a program that performs the method according to any one of claims 1 to 16.

18. A device for implementing a virtual button through a camera, the device comprising:
a pixel data acquisition unit that, after an application has been executed in response to a user input, acquires pixel data by performing photographing by a camera contained in the device;
a pixel value change recognition unit that recognizes a change in a pixel value of one region of the pixel data acquired through the photographing by the camera; and
an operation performance unit that performs a preset one operation of the application in response to the recognition of the change in the pixel value.

19. The device of claim 18, wherein the pixel value change recognition unit recognizes an input adapted to perform the one operation of the application when a change in some pixel values of the pixel data is made to exceed a threshold value by an action of a user covering at least one region of a lens of the camera.

20. The device of claim 18, wherein:
the pixel data acquisition unit acquires pixel data of some pixels that belong to the pixel data of all pixels acquired through the photographing by the camera and that are set as a region of interest; and
the pixel value change recognition unit recognizes an input adapted to perform the one operation when a change in a pixel value of pixel data of the some pixels exceeds a threshold value.

21. The device of claim 18, further comprising:
a test mode execution unit that, after the application has been executed on the user terminal, executes a camera test mode, and sets a threshold value adapted to recognize an input adapted to perform the one operation of the application.

22. The device of claim 21, wherein the test mode execution unit:
performs the photographing by the camera;
recognizes the change in the pixel value of the one region of the pixel data acquired through the photographing by the camera in the camera test mode via an action of a user covering at least one region of a lens of the camera; and
sets the threshold value by considering the recognized change in the pixel value.

23. The device of claim 21, wherein:
the test mode execution unit recognizes a change in a pixel value of some pixels that belong to the pixel data of all pixels acquired through the photographing by the camera in the camera test mode and that are set as a region of interest, and sets a threshold value for the region of interest; and
the pixel value change recognition unit recognizes the input adapted to perform the one operation of the application by comparing the change in the pixel value of the region of interest with the set threshold value.

24. The device of claim 23, wherein the test mode execution unit corrects locations of the some pixels set as the region of interest after recognizing the change in the pixel data acquired via the camera test mode.

25. The device of claim 18, wherein the pixel value change recognition unit recognizes an input adapted to perform the one operation of the application by correcting a threshold value based on a change in the amount of light in an environment around the user terminal and then comparing the change in the pixel value of the one region of the pixel data with the threshold value.

26. The device of claim 25, wherein the pixel value change recognition unit acquires a current pixel value for the acquired pixel data, acquires an average value of current pixel values from a current time point to a preset previous time point and sets the average value as the threshold value, and recognizes the input adapted to perform the one operation of the application by recognizing an action of a user covering a lens region of the camera or an action of the user not covering the lens region of the camera through comparison between the current pixel value and the threshold value.

27. The device of claim 26, wherein the pixel value change recognition unit sets 50% or less of the average value as a first threshold value, and sets 200% or more of the average value as a second threshold value.

28. The device of claim 27, wherein the pixel value change recognition unit:
when the current pixel value is smaller than the first threshold value, recognizes that the action of the user covering the lens region of the camera has occurred in a state in which the lens region of the camera was not covered, and thus recognizes an operation input related to covering of the lens region of the camera; and
when the current pixel value is larger than the second threshold value, recognizes that the action of the user not covering the lens region of the camera has occurred in a state in which the lens region of the camera was covered, and thus recognizes an operation input related to not covering of the lens region of the camera.

29. The device of claim 18, further comprising a light supply unit that supplies light to a photographing region of the camera after the application has been executed on the user terminal.

30. The device of claim 29, wherein the light supply unit:
supplies the light when the amount of light in an environment around the user terminal is smaller than a preset value; and
stops the light supply operation when pixel data acquired while the light supply operation is stopped for a preset time at each predetermined period after starting of the light supply operation is higher than the preset value.

31. The device of claim 29, wherein the pixel value change recognition unit:
recognizes the change in the pixel value based on light and shade of the pixel data when a brightness value in an environment around the user terminal is smaller than a preset value; and
recognizes the change in the pixel value based on saturation and color of the pixel data when the brightness value in the environment around the user terminal is equal to or larger than the preset value or light is supplied from the light supply unit of the user terminal.

32. The device of claim 31, wherein the pixel value change recognition unit recognizes the change in the pixel value by comparing the change in the pixel value with a saturation threshold value for a red color when the brightness value in the environment around the user terminal is equal to or larger than the preset value or the light is supplied from the light supply unit of the user terminal.

33. The device of claim 18, wherein the pixel data is initial data when the initial data is acquired through the photographing by the camera and photo data that is stored in the user terminal and can be identified by a user is RGB data obtained by converting the initial data.
